Europäisches Patentamt

European Patent Office

Office européen des brevets

(11) Veröffentlichungsnummer: **0 215 193**
**B1**

(12) **EUROPÄISCHE PATENTSCHRIFT**

(45) Veröffentlichungstag der Patentschrift: 25.07.90

(51) Int. Cl.⁵: **B 23 P 15/00**

(21) Anmeldenummer: 86107070.4

(22) Anmeldetag: 23.05.86

(54) Verfahren zur Herstellung einer nachgiebigen Walze.

(30) Priorität: 17.09.85 DE 3533045

(43) Veröffentlichungstag der Anmeldung:
25.03.87 Patentblatt 87/13

(45) Bekanntmachung des Hinweises auf die
Patenterteilung:
25.07.90 Patentblatt 90/30

(84) Benannte Vertragsstaaten:
BE CH DE FR GB IT LI NL SE

(56) Entgegenhaltungen:
FR-A-1 197 142
US-A-2 571 146
US-A-2 707 017
US-A-3 043 064
US-A-3 115 730
US-A-3 141 806
US-A-3 280 516

(73) Patentinhaber: Firma Carl Freudenberg
Höhnerweg 2-4
D-6940 Weinheim/Bergstrasse (DE)

(72) Erfinder: Büsen, Dietmar
Waldstrasse 31
D-6149 Fürth (DE)
Erfinder: Schlüter, Helmut, Dr.
Sudetenstrasse 46
D-6101 Reichelsheim (DE)
Erfinder: Weghmann, Arnold
Kurpfalzstrasse 26
D-6940 Weinheim-Lützelsachsen (DE)
Erfinder: Blümler, Norbert
Auf der Entenweide 9
D-6944 Hemsbach (DE)
Erfinder: Tecl, Bohuslav
Im Langgewann 57
D-6940 Weinheim-Lützelsachsen (DE)

Courier Press, Leamington Spa, England.

**Beschreibung**

Die Erfindung betrifft ein Verfahren zur Herstellung einer nachgiebigen Walze, bei dem ein flexibler Streifen mit wenigstens einer parallel zu seiner Erstreckung verlaufenden Einfaltung und einem der Einfaltung zugeordneten Zugelement versehen wird, bei dem der Streifen mit der Einfaltung auf den Walzenkern aufgebracht und unter Bildung von nebeneinanderliegenden Windungen wendelförmig auf denselben aufgewickelt wird.

Auf ein Verfahren der vorgenannten Art nimmt die FR—A—1 091 585 Bezug. Es läßt nur relativ niedrige Wickelgeschwindigkeiten zu und führt zur Herstellung von Walzen, die Oberflächenzonen einer unterschiedlichen Härte haben. Das Verfahren ist aus diesem Grunde in wirtschaftlicher und in technischer Hinsicht wenig befriedigend.

Der Erfindung liegt die Aufgabe zugrunde, ein Verfahren zur Herstellung einer nachgiebigen Walze zu zeigen, das die Anwendung wesentlich höherer Wickelgeschwindigkeiten erlaubt und das zugleich die Erzielung einer gleichmäßigen Oberflächenbeschaffenheit der erhaltenen Walze gewährleistet.

Diese Aufgabe wird erfindungsgemäß bei einem Verfahren der eingangs genannten Art dadurch gelöst, daß das Zugelement und der Streifen vor der Durchführung des Wickelvorganges unverschiebbar aneinander festgelegt werden.

Das Zugelement weist eine kleinere Dehnung auf als der zugehörige Streifen und zweckmäßig eine solche, die unterhalb von 50 % der Dehnung des Streifens liegt, bezogen auf eine bestimmte Belastung. Die sich unter der Einwirkung der Wickelspannung ergebende Dehnung der aus Zugelement und Streifen gebildeten Einheit wird daher im wesentlichen durch die sich ergebende Dehnung des Zugelementes bestimmt. Sie ist auch bei hohen Wickelgeschwindigkeiten leicht kontrollierbar und auf präzise Werte einstellbar.

Die Erzeugung eines Walzenmantels von großer Gleichmäßigkeit in allen Teilbereichen bereitet daher keine Schwierigkeiten.

Der zur Anwendung gelangende flexible Streifen kann aus irgendeinem der einschlägig verwendeten Materialien bestehen. In bezug auf die Erzeugung von Abquetsch- oder Einölwalzen hat sich die Verwendung nicht gewebter Flächengebilde vorteilhaft bewährt, insbesondere die Verwendung von Vliesstoffen aus künstlichen und/oder natürlichen Fasern, die einander ohne Richtungsbevorzugung zugeordnet und durch ein Bindemittel verklebt sind. Neben elastomeren Werkstoffen gelangen diesbezüglich vor allem Kunstharze zur Anwendung, wobei die Vernetzung zweckmäßig im Anschluß an die Durchführung des Wickelvorganges vorgenommen wird. Thermoplastische Werkstoffe, insbesondere thermoplastisches Polyurethan, können ebenfalls verwendet werden und erlauben die Erzeugung einer Walze mit besonders guter Schlagzähigkeit. Der erhaltene Walzenmantel zeichnet sich in jedem Falle durch eine besonders gute Homogenität in allen Teilbereichen aus. Eine Verwendung geschäumter oder ungeschäumter Folien zu seiner Herstellung ist ebenfalls möglich.

Das Zugelement besteht aus einem Material geringer Dehnbarkeit, das leicht an dem Streifen festlegbar ist. Es kann einen oder mehrere Fäden umfassen, wobei die einzelnen Fäden im letztgenannten Falle gegebenenfalls untereinander verzwirnt oder verklebt sein können. Die Festlegung an dem zugehörigen Streifen kann durch gegenseitige Verklebung, gegenseitiges Vernähen oder gegenseitiges Vernadeln erfolgen, wobei eine beidseitige Abdeckung des Zugelementes ohne weiteres in die Überlegungen miteinbezogen werden kann.

Sie empfiehlt sich insbesondere in den Fällen, in denen die unverschiebbare Festlegung des Zugelementes durch einen Vernadelungsvorgang bewirkt wird. Eine Erzeugung des Zugelementes während seiner Festlegung an dem Streifen ist ebenfalls möglich, beispielsweise durch unmittelbares Aufdrucken oder Aufspinnen eines eigens zu diesem Zweck zuvor verflüssigten, polymeren Werkstoffes und dessen nachfolgende Verfestigung. Bei Gewährleistung einer innigen gegenseitigen Verbindung zwischen dem Zugelement und dem Streifen wird so ein separater Arbeitsgang gespart.

Das Zugelement wird zweckmäßig vor der Einfaltung des Streifens an diesem festgelegt, was die Erzeugung einer präzisen gegenseitigen Zuordnung erleichtert. Es wird während des sich anschließenden Wickelvorganges der kontinuierlichen Einwirkung einer Zugspannung ausgesetzt, um eine feste Anpressung des radial innerhalb des Zugelementes liegenden Teiles des Streifens an den Walzenkern zu erzielen. Zugleich kann eine axiale Verpressung vorgenommen werden, insbesondere im Hinblick auf die Erzielung einer größeren Festigkeit des erhaltenen Walzenmantels.

Im einfachsten Falle ist der Streifen mit nur einer einzigen Einfaltung und einem der Einfaltung zugeordneten Zugelement versehen. Die Verwendung von Streifen mit mehreren parallel zueinander verlaufenden Einfaltungen und diesen zugeordneten Zugelementen ist jedoch ebenfalls möglich und erlaubt eine noch schnellere Herstellung großformatiger Walzenmäntel.

Das erfindungsgemäße Verfahren wird nachfolgend anhand eines Beispieles weiter erläutert:

Zur Herstellung der vorschlagsgemäßen Walze wird ein Walzenkern aus Stahl verwendet, der einen Durchmesser von 150 mm aufweist. Die Oberfläche ist durch einen Rändelvorgang aufgerauht und wird zur Erzielung einer verbesserten Haftvermittlung zu dem nachfolgend aufzubringenden Walzenmantel mit einem Haftvermittler beschichtet. Dieser besteht aus Epoxidharz und wird in einer Schichtstärke von etwa 1 mm aufgebracht und nachfolgend durch Trocknen bei mäßigen Temperaturen in den C-Zustand überführt.

Zur Erzeugung des Walzenmantels wird ein Vliesstoff aus 100 % Aramidfasern eines Titers von 1,4 den verwendet, die ohne Richtungsbevorzugung vereint und durch einen Vernadelungsvorgang verbunden sind. Das Flächengewicht beträgt 95 g/m². Der Vliesstoff wird in Streifen einer Breite von 40 mm zerlegt, welche unter mittiger Zwischenfügung eines zuvor in einem Abstand von 5D mm Punktförmig mit Epoxidharz bedruckten Glasfadens paarweise zusammengefügt und durch einen Vernadelungsvorgang verbunden werden. Der Glasfaden hat einen Titer von 800 tex und wird durch eine nachfolgende Erwärmung und der daraus resultierenden Aushärtung des Epoxidharzes des fertigen Streifens unverrückbar an demselben festgelegt.

Zur Erzeugung des Walzenmantels wird der Verstärkungsfaden an einem axialen Ende des Walzenkernes festgelegt. Der Walzenkern wird anschließend in eine Drehbewegung versetzt, wodurch der den Verstärkungsfaden enthaltende Streifen zunehmend auf den Umfang aufgewickelt wird.

Um hierbei eine gute gegenseitige Haftung zu erzielen wird der Streifen fortlaufend durch ein flüssiges Epoxidharz enthaltendes Bad geführt und dabei mit Bindemittel versetzt. Die in seitlicher Richtung über den Verstärkungsfaden überstehenden Bereiche des Streifens werden anschließend in auswärtiger Richtung gegeneinander gefaltet, und die auf den Walzenmantel fortlaufend auflaufenden Windungen werden während der Durchführung des Wickelvorganges fortlaufend axial verpreßt. Die Pressung wird nach Abschluß des Wickelvorganges aufrecht erhalten und die vollständig gewickelte Walze in eine Wärmekammer überführt, in der eine Aushärtung des Bindemittels bei einer Temperatur von 100°C während einer Zeitspanne von 5 Stunden erzielt wird. Die Walze kann anschließend aus der Wärmekammer entnommen werden und unter Aufhebung der axialen Verpressung der einzelnen Windungen des Walzenmantels fertig bearbeitet werden, beispielsweise durch Abdrehen und/oder Abschleifen des Außenumfanges.

Die Walze zeichnet sich unabhängig von ihrer Größe durch eine vollkommen ausgeglichene Oberflächenqualität aus, was sich insbesondere auf die Härte der Oberfläche, deren Abriebfestigkeit, deren Glätte und deren Elastizität bezieht. Sämtliche genannten Werte können dabei in Abhängigkeit von der verwendeten Wickelspannung, der angewendeten Verpressung, dem verwendeten Bindemittel und/oder dem verwendeten Vliesstoff sowie dem darin enthaltenen Verstärkungsfaden auf nahezu beliebig große Werte eingestellt werden und in gleichbleibend reproduzierbarer Qualität immer wieder realisiert werden.

## Patentansprüche

1. Verfahren zur Herstellung einer Walze mit nachgiebiger Oberfläche, bei dem ein flexibler Streifen mit wenigstens einer parallel zu seiner Erstreckung verlaufenden Einfaltung und einem der Einfaltung zugeordneten Zugelement versehen wird, bei dem der Streifen mit der Einfaltung auf den Walzenkern aufgebracht und unter Bildung von nebeneinanderliegenden Windungen wendelförmig auf denselben aufgewickelt wird, dadurch gekennzeichnet, daß das Zugelement und der Streifen vor der Durchführung des Wickelverfahrens unverschiebbar aneinander festgelegt werden.

2. Verfahren nach Anspruch 1, dadurch gekennzeichnet, daß das Festlegen durch gegenseitiges Verkleben des Zugelementes und des Streifens bewirkt wird.

3. Verfahren nach Anspruch 1, dadurch gekennzeichnet, daß das Festlegen durch gegenseitiges Vernähen oder Vernadeln des Zugelementes und des Streifens bewirkt wird.

## Revendications

1. Procédé de fabrication d'un cylindre à surface élastique, dans lequel il est prévu une bande flexible avec au moins un repli disposé parallèlement à son extension et un élément de traction correspondant à ce repli, dans lequel la bande avec le repli est appliquée sur le noyau de cylindre et est enroulée sur celui-ci en forme d'hélice avec formation de spires adjacentes, caractérisé en ce que l'élément de traction et la bande sont assemblés l'un à l'autre de manière inamovible avant l'exécution de l'opération de bobinage.

2. Procédé selon la revendication 1, caractérisé en ce que la fixation est assurée par collage mutuel de l'élément de traction et de la bande.

3. Procédé selon la revendication 1, caractérisé en ce que la fixation est assurée par couture ou aiguilletage de l'élément de traction et de la bande.

## Claims

1. A method for the manufacture of a roller having a flexible surface, in which a flexible strip is provided with at least one fold running parallel to its extension and a tension element associated with the fold, in which the strip with the fold is applied to the core of the roller and is wound spirally onto the latter with formation of adjacent windings, characterized in that the tension element and the strip are fastened to each other non-displaceably before the winding process is performed.

2. A method according to claim 1, characterized in that the fastening is effected by mutual bonding of the tension element and the strip.

3. A method according to claim 1, characterized in that the fastening is effected by mutual sewing or pinning of the tension element and the strip.